Europäisches Patentamt

European Patent Office

Office européen des brevets

(11) Veröffentlichungsnummer: **0 411 444 A2**

# EUROPÄISCHE PATENTANMELDUNG

(21) Anmeldenummer: 90114181.2

(22) Anmeldetag: 24.07.90

(51) Int. Cl.⁵: **D21F 3/08**

(30) Priorität: 03.08.89 DE 3925787

(43) Veröffentlichungstag der Anmeldung:
06.02.91 Patentblatt 91/06

(84) Benannte Vertragsstaaten:
CH DE GB IT LI

(71) Anmelder: **Schwäbische Hüttenwerke
Gesellschaft mit beschränkter Haftung
Wilhelmstrasse 67 Postfach 3280
D-7080 Aalen-Wasseralfingen(DE)**

(72) Erfinder: **Neuhöffer, Hans-Friedrich
Schwalbenweg 21
D-7923 Königsbronn(DE)**
Erfinder: **Rittweger, Wolfram
Ulmenweg 4
D-7923 Königsbronn(DE)**
Erfinder: **Vomhoff, Erich
Birkachstrasse 3
D-7923 Königsbronn(DE)**

(74) Vertreter: **Dipl.-Ing. Schwabe, Dr. Dr.
Sandmair, Dr. Marx
Stuntzstrasse 16
D-8000 München 80(DE)**

(54) Verfahren zum Einbringen von Rillen in Walzenoberflächen, sowie eine nach diesem Vefahren bearbeitete Walze.

(57) Die vorliegende Erfindung schlägt ein Verfahren zum Einbringen von Rillen in Walzen vor, die zur Bearbeitung bahnartiger Materialien geeignet sind, wobei eine Laserquelle einen Laserstrahl und eine gerichtete Leitung einen Druckgasstrahl auf die Walzenoberfläche richtet, wodurch das Walzenmaterial in einem scharf definierten Bereich entfernt wird und somit eine Rille ausformt.

Fig. 1

## VERFAHREN ZUM EINBRINGEN VON RILLEN IN WALZENOBERFLÄCHEN, SOWIE EINE NACH DIESEM VERFAHREN BEARBEITETE WALZE

Die vorliegende Erfindung betrifft ein Verfahren zum Einbringen von Drainagerillen in der Oberfläche einer Walze, die zur Bearbeitung bahnartiger Materialien, z. B. Papier, geeignet ist, sowie eine nach diesem Verfahren bearbeitete Walze.

Im folgenden wird insbesondere auf die Verfahrensweise in bezug auf die Herstellung von Papier eingegangen.

Bei modernen Papiermaschinen wird ein Wasser-Fasergemisch mit einem Feststoffanteil von ca. 2 % auf ein endlos umlaufendes Sieb aufgebracht. Ein großer Teil des Wassers fließt durch die Sieböffnungen ab, so daß sich nach kurzer Zeit der Feststoffanteil auf ca. 50 % vergrößert. Im weiteren Verlauf wird die noch wenig feste Papierbahn auf ein endlos umlaufendes Filz überführt. Zur weiteren Entwässerung werden Papierbahn und Filz gemeinsam durch die sog. Naßpresse geführt. Dabei handelt es sich um Zwei- oder Mehrwalzen-Walzwerke, z. B. bestehend aus einer Steinwalze mit einer oder mehreren Anpreßwalzen. Während die Steinwalze auf der Papierseite glatt ist, werden die Anpreßwalzen auf der Filzseite zumeist gerillt ausgeführt. Durch den Druck im Walzenspalt wird ein weiterer Teil des Wassers in die Walzenrille gedrückt und bei weiterer Umdrehung der Anpreßwalzen wieder abgeschleudert. Gerillte Anpreßwalzen tragen so entscheidend zur Ent wässerung bei und verringern damit die in der Trokkenpartie aufzuwendende Heizleistung für die weitere Trocknung des Papiers.

Aus Korrosionsgründen werden Rillenwalzen mit einem Edelstahlbezug ausgeführt.

Das dieses Material sehr zäh ist und die notwendigen Rillen relativ schmal und tief, ist ein mechanisches Fräsen der Rillen zwar möglich, aber sehr aufwendig und wegen des Werkzeugverbrauchs sehr teuer.

Ein alternatives Verfahren, einen gerillten Edelstahlbezug aufzubringen, besteht darin, daß man einen vorbereiteten Walzenkörper mit einem besonders ausgeformten Edelstahlband umwickelt. Das Profil dieses Bandes hat eine Höhe von etwa 12 mm und im Bereich der Rille eine Stärke, die dem Steg zwischen den Rillen entspricht.

Unten ist das Profil so breit wie Steg zuzüglich Rille. Wird das Edelstahlband nun unter Zugspannung und Andrücken auf den Walzenkörper aufgewickelt, so entsteht eine wendelförmig gerillte Walzenoberfläche. Da das Ausgangsmaterial teuer ist, ist auch dieses Verfahren sehr aufwendig.

Reißt außerdem das Edelstahlband, nachdem bereits ein Teil der Walze umwickelt ist, muß der bereits umwickelte Teil wieder vom Band befreit werden und das Aufwickeln mit neuem Band von vorne begonnen werden.

Die vorliegende Erfindung soll den Nachteilen des zuvor aufgeführten Standes der Technik Abhilfe verschaffen und insbesondere ein Verfahren vorschlagen, mit dem ohne großen Aufwand verschiedene Rillenformen in der Oberfläche einer solchen Walze ausgebildet werden können.

Dies wird durch das Merkmal im kennzeichnenden Teil des Anspruchs 1 erreicht.

Durch die Merkmale der Unteransprüche werden zweckmäßige Varianten des Verfahrens gemäß der vorliegenden Erfindung definiert.

Gemäß der vorliegenden Erfindung wird der fokussierte Lichtstrahl einer Laserquelle auf die zu rillende Oberfläche einer Walze gerichtet. Dabei schmilzt der Laserstrahl sehr schnell einen begrenzten Bereich der Oberfläche auf. Durch Anblasen der Schmelzstelle mittels eines gerichteten Druckgasstrahl, wird das erschmolzene Material weggeblasen. Wird die Walze nun gedreht, entsteht eine Rille. Bewegt man die Laserquelle gleichzeitig in axialer Richtung zur Walze, entsteht eine wendelförmige Rille.

Durch die verschiedenen einstellbaren Parameter dieses Verfahrens können Form, Tiefe und Verlauf der Rille eingestellt werden, ganz so, wie es z. B. zur Optimierung der Entwässerungswirkung der beispielhaft angeführten Presswalze erforderlich ist.

In der Regel ist es vorteilhaft, im zu bearbeitenden Bereich an der Oberfläche der Walze eine Schutzgasatmosphäre zu erzeugen, die z. B. die Oxidation der Kantenbereiche verhindert, wodurch die Kantenqualität der Rillen verbessert werden kann. Dazu braucht der Druckgasstrahl nur aus inerten Gasen zu bestehen.

Um die Kühlwirkung des Druckgasstrahles herabzusetzen, ist es vorteilhaft, das Druckgas zu erwärmen.

Es ist auch möglich, die Wirkung des Laserstrahls durch oxidierende Gasgemische zu unterstützen. Dazu wird dem Gas für den Druckgasstrahl Sauerstoff zugemischt. Das oxidierende Gasgemisch verbrennt einen Teil des Metalls und erzeugt so zusätzliche Schmelzenergie.

Die Rillen sollten keinesfalls tiefer in den Walzenmantel eingebrannt werden als 10 mm. Vorzugsweise liegt die Rillentiefe in einem Bereich zwischen 3 und 7 mm, wobei üblicherweise eine Rillentiefe von 5 mm verwendet wird.

Für gewisse Anwendungen kann es von Vorteil sein, den Laserstrahl unter einem schrägen Winkel auf die zu bearbeitende Walzenoberfläche auftreffen zu lassen. Sollen sich z. B. die Rillen überkreuzen, so würden sich im Bereich der sich kreuzenden Rillen die Eindringtiefen des Laserstrahles in das Material nahezu summieren, so daß an den Rillenkreuzungspunkten regelrechte Löcher entstehen würden. Läßt man den Laserstrahl jedoch unter einem schrägen Winkel auf die Walzenoberfläche auftreffen, so wird dieser Effekt weitgehendst vermieden. Auch materialspezifische Reflexionen des Laserstrahles lassen sich durch winkeliges Auftreffen des Laserstrahls auf die Walzenoberfläche positiv beeinflussen. Zudem ist es leichter, das verdampfte Metall aus der Walzenoberfläche herauszutragen, wodurch die Arbeitsgeschwindigkeit und die Rillenqualität äußerst positiv beeinflußt werden.

Die Rillen, die unter Verwendung des Laserstrahls im Walzenmantel angelegt werden, sollten nicht breiter als 1 mm, bevorzugt 0,3 bis 0,7 mm breit ausgeführt werden. In der Regel werden Rillen mit einer Breite von 0,5 mm hergestellt.

Besonders zweckmäßig ist in vorliegendem Falle die Verwendung eines $CO_2$-Lasers, da dessen Technik ausgereift und erprobt ist. Auch andere Laser-Arten sind anwendbar.

Allgemein jedoch sollten Laser mit Energiedichten von mindestens 1 kW, bevorzugt mindestens 5 kW zur Ausführung des erfindungsgemäßen Verfahrens verwendet werden.

Zur Herstellung der Rillen in der Walzenoberfläche befindet sich die zu bearbeitende Walze in einer Halterung, in der die Walze mit einer bestimmten, gleichmäßigen Geschwindigkeit um ihre Rotationsachse gedreht werden kann. Um die gewünschte Rillentiefe zu erzielen, muß der Laserstrahl eine bestimmte Verweildauer in einem festgelegten Bereich auf der Walzenoberfläche haben. Dieser erforderlichen Verweildauer wird durch eine entsprechend eingestellte Rotationsgeschwindigkeit der Walze Rechnung getragen. Die notwendige Verweildauer läßt sich natürlich auch noch über die Energiedichte des Laserstrahls regeln.

Um eine wendelförmige Rille auf der Walzenoberfläche zu erhalten, kann die arbeitende Laserquelle bzw. der Laserstrahl entlang der zu bearbeitenden Walze bewegt werden. Die Geschwindigkeit, mit der diese Bewegung stattfindet, ergibt im Zusammenhang mit der Drehgeschwindigkeit der Walze eine bestimmte Steigung für die anzulegende, wendelförmige Rille.

Es ist denkbar, daß es unter bestimmten Voraussetzungen zweckmäßig ist, ausschließlich die Walze oder aber ausschließlich die Laserquelle bzw. den Laserstrahl die notwendigen Bewegungen zur Ausgestaltung der Rille ausführen zu lassen.

Die Steigung der wendelförmigen Rille sollte so bemessen sein, daß der Abstand zwischen zwei benachbarten Rillenkanälen nicht größer ist als 10 mm und bevorzugt 5 mm ausmacht.

Für bestimmte Anwendungen kann es von Vorteil sein, in der Walzenoberfläche nicht nur eine wendelförmige Rille auszubilden, sondern z. B. mehrere gegenläufige, wendelförmige Rillen, die sich in ihrem Verlauf häufig überschneiden.

Es wäre auch denkbar, eine Vielzahl von radial geschlossenen Rillen anzulegen, die über parallel zur Walzenachse auf der Walzenoberfläche verlaufende Rillen miteinander verbunden sind.

Es ist denkbar, durch Strahlteilung zwei oder mehrere parallele Rillen gleichzeitig einzubringen und so die Bearbeitungszeit zu verkürzen.

Die Erfindung wird nachstehend anhand eines zeichnerisch dargestellten Ausführungsbeispiels näher erläutert, aus welchem weitere Vorteile und Merkmale hervorgehen:

Es zeigen:

Fig. 1 eine Anordnung zur Ausführung des erfindungsgemäßen Verfahrens im Querschnitt;

Fig. 2 die gleiche Anordnung wie in Fig. 1, jedoch in der Draufsicht; und

Fig. 3 im vergrößerten Maßstab das Detail "X" einer Walzenoberfläche, in der durch Anwendung des erfindungsgemäßen Verfahrens Rillen ausgebildet sind.

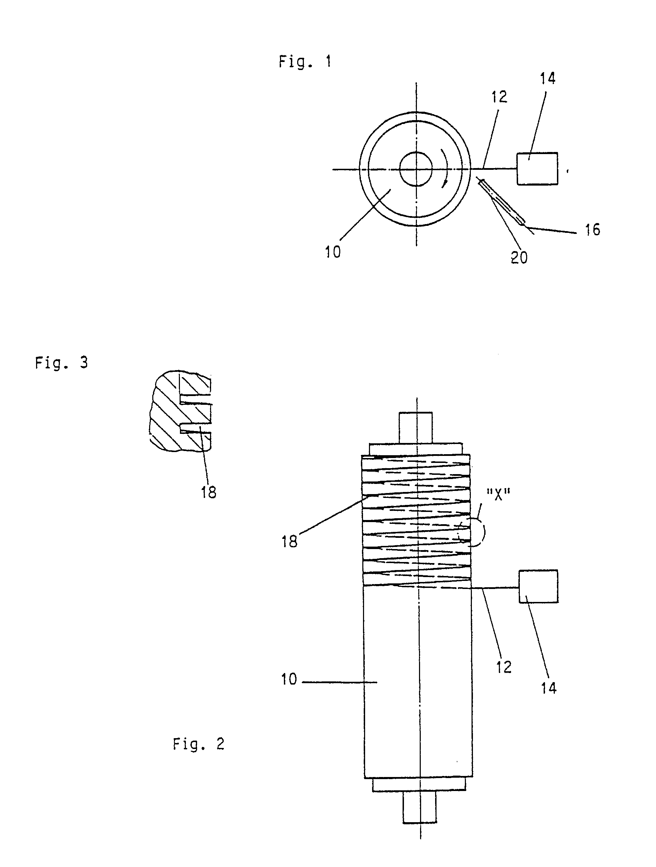

Fig. 1 zeigt schematisch eine prinzipielle Anordnung zur Ausführung des erfindungsgemäßen Verfahrens. Eine Walze 10, die sich in Richtung des Pfeils drehbar und/oder verschiebbar in einer Halterung befindet, wird mittels eines Laserstrahls 12 bearbeitet. Der Laserstrahl 12 wird von einer Laserquelle 14 erzeugt. Bevorzugt wird als Laserquelle 14 ein $CO_2$-Laser eingesetzt. über ein Zuleitungsrohr bzw. über eine Kanüle 20 kann in dem momentan zu bearbeitenden Bereich auf der Walzenoberfläche eine Schutzgasatmosphäre bzw. eine oxidierende Atmosphäre erzeugt werden. Wird das assistierende Gas mit hohem Druck auf die zu bearbeitende Oberfläche der Walze gerichtet, so werden durch den Gasstrom gleichzeitig die geschmolzenen, verdampften bzw. Verbrannten Materialien aus der entstehenden Rille und aus dem Arbeitsbereich des Laserstrahles 12 auf der Walzenoberfläche fortgeblasen.

Die Walze 10 wird mit einer bestimmten Geschwindigkeit gedreht und gleichzeitig axial verschoben. Durch die Drehgeschwindigkeit der Walze kann die Verweildauer des Laserstrahls 12 auf einer bestimmten Stelle der Walzenoberfläche beeinflußt werden. Mit anderen Worten, bei einer bestimmten, eingestellten Laserstrahlleistungsdichte der Laserquelle 14 kann durch eine Variation der Drehgeschwindigkeit die Tiefe der Drainagerillen in der Walzenoberfläche der Walze 10 definiert werden. Dabei sollte die Walze 10 bei einer bestimmten Leistung der Laserquelle 14 nicht so langsam gedreht werden, daß die Rillentiefe größer als 10 mm wird. Bevorzugt sollte die Rillentiefe zwischen 3 und 7 mm, in der Regel bei 5 mm liegen.

Der Laserstrahl 12 sollte auf der Oberfläche der Walze 10 über eine Breite von maximal 1 mm, bevorzugt 0,3 bis 0,7 mm wirken. In der Regel sollte der Laserstrahl 12 das Material der Walzenoberfläche über eine Breite von 0,5 mm verdampfen und somit eine Rillenbreite von 0,5 mm schaffen.

Durch die Verschiebung der Walze in Axialrichtung wird der seitliche Abstand zwischen zwei benachbarten Rillenkanälen bestimmt. Dabei sollte die maximale axiale Verschiebegeschwindigkeit der Walze 10 keinen größeren Abstand zwischen zwei benachbarten Rillenkanälen 18 herstellen als maximal 10 mm, bevorzugt ca. 5 mm.

Selbstverständlich läßt sich die Rillentiefe auch einstellen, indem die Intensität des Laserstrahls 12 erhöht bzw. erniedrigt wird, während sich die Walze 10 mit konstanter Geschwindigkeit dreht.

Sämtliche Bewegungen können ausschließlich von der Walze 10, aber auch ausschließlich vom Laser (bzw. Laserstrahl) ausgeführt werden. Bevorzugt wird die Walze 10 die Drehbewegung ausführen, während der Laserstrahl 12 bzw. die Laserquelle 14 die axiale Bewegung entlang der Achse der Walze 10 ausführt.

Fig. 2 zeigt eine schematische, prinzipielle Darstellung der Anordnung gemäß Fig. 1, jedoch in der Draufsicht. Deutlich ist der wendelförmige Verlauf der Rille 18 zu erkennen. Die Rille 18 kann jedoch auch aus gegenläufigen wendelförmigen Rillen 18 bestehen, die sich überschneiden. Bei dieser Abbildung wird die Laserquelle 14 so justiert, daß der Laserstrahl 12 senkrecht auf die Walzenoberfläche auftrifft. Anwendungsorientiert kann die Laserquelle 14 aber auch derart justiert werden, daß der Laserstrahl 12 unter einem bestimmten Winkel zwischen 90 und annähernd 0° auf die Walzenoberfläche auftrifft.

Fig. 3 zeigt im vergrößerten Maßstab das Detail "X" von Fig. 2. Deutlich sind die Rillen 18 zu erkennen, die durch das erfindungsgemäße Verfahren erzeugt worden sind. Durch einen entsprechenden, zusätzlichen Neigungswinkel des Laserstrahles können die Drainagerillen 18 auch einen Verlauf erhalten, der nicht senkrecht zur Oberfläche der Walze ist.

**Ansprüche**

1. Verfahren zum Einbringen von Rillen in der Oberfläche einer Walze zur Bearbeitung von bahnartigen Materialien, insbesondere Papier, **dadurch gekennzeichnet,** daß die Rillen (18) unter Verwendung eines Laserstrahls (12) erzeugt werden.

2. Verfahren nach Anspruch 1, dadurch gekennzeichnet, daß die Rillen (18) unter Verwendung eines Druckgasstrahles aus einer gerichteten Leitung (20) hergestellt werden, welcher das von dem Laserstrahl (12) erschmolzene Material aus der Rille ausbläst.

3. Verfahren nach Anspruch 1 oder 2, dadurch gekennzeichnet, daß es sich bei dem Druckgas um ein inertes Gas oder Gasgemisch handelt.

4. Verfahren nach Anspruch 1 oder 2, dadurch gekennzeichnet, daß es sich bei dem Druckgas um ein oxidierendes Gas oder Gasgemisch handelt.

5. Verfahren nach einem der Ansprüche 1 bis 4, dadurch gekennzeichnet, daß das Druckgas bzw. Druckgasgemisch erwärmt wird, bevor es aus der gerichteten Leitung (20) strömt.

6. Verfahren nach einem der Ansprüche 1 bis 5, dadurch gekennzeichnet, daß die Rillen nicht tiefer als 10 mm, bevorzugt mit einer Tiefe von 3 bis 7 mm, hergestellt werden.

7. Verfahren nach einem der Ansprüche 1 bis 6, dadurch gekennzeichnet, daß die Rillen mit einer Breite von maximal 1 mm, bevorzugt mit einer Breite von 0,3 bis 0,7 mm, hergestellt werden.

8. Verfahren nach einem der Ansprüche 1 bis 7, dadurch gekennzeichnet, daß der Laserstrahl (12) lotrecht auf die Oberfläche der Walze (10) auftrifft.

9. Verfahren nach einem der Ansprüche 1 bis 7, dadurch gekennzeichnet, daß der Laserstrahl (12) in einem definierten Winkel auf die Oberfläche der Walze (10) auftrifft.

10. Verfahren nach einem der Ansprüche 1 bis 9, dadurch gekennzeichnet, daß eine $CO_2$-Laserquelle verwendet wird.

11. Verfahren nach einem der Ansprüche 1 bis 10, dadurch gekennzeichnet, daß eine Laserquelle (14) mit einer Leistung von mindestens 1 kW, bevorzugt mit mindestens 5 kW verwendet wird.

12. Verfahren nach einem der Ansprüche 1 bis 11, dadurch gekennzeichnet, daß die Walze (10) mit einer Geschwindigkeit gedreht wird, die die benötigte Rillentiefe bewirkt.

13. Verfahren nach einem der Ansprüche 1 bis 12, dadurch gekennzeichnet, daß die Laserquelle (14) entlang der sich drehenden Walze (10) bewegt wird.

14. Verfahren nach einem der Ansprüche 1 bis 13, dadurch gekennzeichnet, daß die Walze (10) während der Herstellung der Rillen (18) gedreht und axial bewegt wird, um eine wendelförmige Rille (18) in der Oberfläche der Walze (10) zu erzeugen.

15. Verfahren nach einem der Ansprüche 1 bis 14, dadurch gekennzeichnet, daß benachbarte Rillen (18) nicht weiter als 10 mm, insbesondere 3 mm, voneinander entfernt hergestellt werden.

16. Verfahren nach einem der Ansprüche 1 bis 15, dadurch gekennzeichnet, daß vorhandene flache Rillen auf die im Anspruch 4 genannte Tiefe gebracht werden.

17. Walze mit Rillen in ihrer Oberfläche, dadurch gekennzeichnet, daß die Rillen (18) durch das Verfahren nach mindestens einem der Ansprüche 1 bis 16 hergestellt sind.

18. Walze nach Anspruch 17, dadurch gekennzeichnet, daß die Rillen (18) maximal 1 mm, bevorzugt 0,3 bis 0,7 mm und insbesondere 0,5 mm breit sind.

19. Walze nach Anspruch 17 oder 18, dadurch gekennzeichnet, daß die Rillen (18) maximal 10 mm tief, bevorzugt 3 bis 7 mm und insbesondere 5 mm tief sind.

20. Walze nach einem der Ansprüche 17 bis 19, dadurch gekennzeichnet, daß benachbarte Rillen bzw. benachbarte Kanäle einer wendelförmigen Rille (18) 10 mm, bevorzugt 5 mm, voneinander entfernt sind.

21. Walze nach einem der Ansprüche 17 bis 20, dadurch gekennzeichnet, daß sich überschneidende Rillen, insbesondere mit gegenläufiger wendelförmiger Steigung, in der Walzenoberfläche angelegt sind.

Fig. 1

Fig. 3

Fig. 2